(19) **Europäisches Patentamt European Patent Office Office européen des brevets**

(11) **EP 2 389 302 B1**

(12) **FASCICULE DE BREVET EUROPEEN**

(45) Date de publication et mention
de la délivrance du brevet:
**19.11.2014 Bulletin 2014/47**

(51) Int Cl.:
***B60M 1/28*** *(2006.01)*     ***B60M 3/00*** *(2006.01)*
***G01R 31/08*** *(2006.01)*

(21) Numéro de dépôt: **10707568.1**

(22) Date de dépôt: **21.01.2010**

(86) Numéro de dépôt international:
**PCT/FR2010/050093**

(87) Numéro de publication internationale:
**WO 2010/084287 (29.07.2010 Gazette 2010/30)**

(54) **PROCÉDÉ DE DÉTECTION PRÉVENTIVE DE DÉFAUTS DE CONTACT ET DE DIAGNOSTIC DE LEUR ORIGINE ENTRE UNE LIGNE D'ALIMENTATION ÉLECTRIQUE ET UN ORGANE CONDUCTEUR MOBILE LE LONG DE CETTE LIGNE**

VERFAHREN ZUR PRÄVENTIVEN ERKENNUNG UND ZUR DIAGNOSE DES URSPRUNGS VON KONTAKTFEHLERN ZWISCHEN EINER STROMVERSORGUNGSLEITUNG UND EINEM ENTLANG DIESER LEITUNG BEWEGLICHEN LEITFÄHIGEN ELEMENT

METHOD FOR THE PREVENTIVE DETECTION, AND THE DIAGNOSIS OF THE ORIGIN, OF CONTACT FAULTS BETWEEN AN ELECTRICITY SUPPLY LINE AND A CONDUCTING MEMBER MOVABLE ALONG SAID LINE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **26.01.2009 FR 0950448**

(43) Date de publication de la demande:
**30.11.2011 Bulletin 2011/48**

(73) Titulaire: **Alstom Transport**
**92300 Levallois Perret (FR)**

(72) Inventeurs:
• **KLONOWSKI, Thomas**
**F-64160 SEDZERE (FR)**
• **AUBIGNY, Christophe**
**F-65390 Sarniguet (FR)**

(56) Documents cités:
**WO-A-2007/119642**     **JP-A- 2 290 746**
**JP-A- 4 217 801**     **JP-A- 2006 193 035**
**KR-A- 20070 043 209**

**Description**

La présente invention concerne un procédé de détection préventive et de diagnostic de l'origine de défauts de contact entre une ligne d'alimentation électrique d'une infrastructure et un organe fixe conducteur d'un matériel roulant, mobile le long de la ligne, des arcs électriques se produisant en cas de défaut de contact entre la ligne d'alimentation électrique et l'organe conducteur mobile.

Le problème de détection préventive et de diagnostic de défauts de contact entre une ligne d'alimentation et un organe alimenté mobile sur la ligne est général dans la technique. Il est d'une manière générale lié aux questions de maintenance préventive et à la distinction du matériel incriminé dans la défaillance afin d'affecter le défaut soit à l'infrastructure soit à l'organe mobile.

Dans le domaine, plus particulier aux applications ferroviaires, des lignes aériennes de contact (LAC), le document JP 02290746 décrit un dispositif permettant d'informer l'exploitant d'une éventuelle usure du contact pantographe-caténaire afin de prévenir un accident pouvant aller, dans le cas des LAC, jusqu'à l'arrachement de la caténaire ou la destruction complète du pantographe.

On rappelle que les trains interopérables, c'est-à-dire aptes à circuler sur des lignes alimentées par différentes tensions et/ou intensités, sont alimentés par une caténaire ou par un rail d'alimentation soit sous une tension alternative (généralement 25 kV et 15 kV) soit sous une tension continue (à partir de 750 V et jusqu'à 3000 V) avec le retour du courant se faisant par le rail guidant les roues.

Pour éviter une chute de tension trop importante dans la caténaire, celle-ci est sectionnée en plusieurs tronçons. Ces tronçons peuvent atteindre une longueur de 50 km pour les trains à grande vitesse (en alimentation alternative) et jusqu'à 2 km pour les tramways (en alimentation continue). A chaque extrémité du tronçon, toujours pour éviter les chutes de tension, une sous-station d'alimentation permet d'avoir le même potentiel en début et fin de tronçon.

Une difficulté dans la gestion de l'alimentation électrique dans le domaine ferroviaire réside dans l'important trafic, caractérisé par un nombre important de véhicules transitant sur une voie, et dans la longueur de la ligne d'alimentation électrique relativement grande. Il se pose un problème de maintenance de la voie et de la ligne d'alimentation électrique car le trafic important use mécaniquement et thermiquement la bande de contact de la caténaire ainsi que les rails.

De plus les durées d'exploitation quotidienne de ces voies sont très longues, plus de 18 heures par jour, ce qui ne laisse que très peu de temps pour assurer la maintenance préventive sur de grandes longueurs de rails et de caténaires formant les lignes d'alimentation électrique.

Ainsi, il est souhaitable de pouvoir disposer d'un procédé et d'un dispositif permettant de diagnostiquer l'origine des défauts de contacts entre un organe conducteur mobile et la ligne d'alimentation, dès la survenance des premiers signes de dégradation afin de permettre une maintenance préventive efficace et d'un coût raisonnable. Cela permet aussi de distinguer l'usure de la ligne d'alimentation de l'usure du pantographe ou du frotteur.

Plus particulièrement, l'invention a pour but de fournir un procédé permettant de repérer en cours de fonctionnement des défauts de contact et leur origine, entre une ligne d'alimentation électrique de réseau ferroviaire avec un organe de contact mobile, ces défauts étant dus notamment à l'usure.

A cet effet, l'invention a tout d'abord pour objet un procédé de détection préventive et de diagnostic de l'origine de défauts de contact entre une ligne d'alimentation électrique d'une infrastructure et un organe fixe conducteur d'un matériel roulant, mobile le long de la ligne, des arcs électriques se produisant en cas de défaut de contact entre la ligne d'alimentation électrique et l'organe conducteur mobile, caractérisé par le fait qu'il comprend les étapes consistant à :

- détecter lesdits arcs électriques,
- localiser les arcs électriques détectés,
- déterminer la fréquence d'occurrence des arcs électriques détectés, et
- déduire l'origine des défauts de contact à partir de la localisation et des fréquences d'occurrence desdits arcs électriques, en déterminant la responsabilité de l'infrastructure fixe et du matériel roulant dans la cause du défaut, le procédé étant mis en oeuvre par des moyens de traitement informatiques.

Dans un mode de mise en oeuvre particulier, l'invention comporte l'une ou plusieurs des caractéristiques suivantes :

- l'étape de détection desdits arcs électriques comprend la détection des signaux acoustiques émis par lesdits arcs électriques ;
- l'étape de détection desdits arcs électriques comprend la détection des signaux électriques émis par lesdits arcs électriques ;
- la détection desdits signaux est effectuée par analyse fréquentielle ;
- l'analyse fréquentielle est une analyse par ondelettes ;
- l'analyse par ondelettes est une analyse par ondelettes discrètes ;

- la localisation des arcs électriques détectés est effectuée à partir de l'écart de temps entre l'instant de détection desdits signaux électriques et l'instant de détection desdits signaux acoustiques ;
- le procédé est appliqué au diagnostic de l'état de contact entre une caténaire de réseau ferroviaire, respectivement un rail de voie ferrée, et la bande de contact d'un pantographe de véhicule ferroviaire, respectivement une roue de véhicule ferroviaire ;
- au moins l'étape de détection des arcs électriques est effectuée à l'emplacement d'une sous-station d'alimentation ;
- l'étape de localisation des arcs électriques sur un tronçon de caténaire est effectuée à partir des deux sous-stations alimentant ledit tronçon.

L'invention a également pour objet un produit programme d'ordinateur, comprenant un jeu d'instructions aptes à la mise en oeuvre d'un procédé tel que décrit ci-dessus, lorsqu'il est exécuté par une unité de traitement informatique.

L'invention a également pour objet un équipement de détection préventive et de diagnostic de l'origine, pour la mise en oeuvre d'un procédé caractérisé par le fait qu'il comprend :

- des moyens de détection desdits arcs électriques,
- des moyens de localisation des arcs électriques détectés,
- des moyens de détermination de la fréquence d'occurrence des arcs électriques détectés, et
- des moyens de traitement informatique pour déduire l'origine des défauts de contact à partir de la localisation et des fréquences d'occurrence desdits arcs électriques, en déterminant la responsabilité de l'infrastructure et du matériel roulant dans la cause du défaut.

L'invention a également pour objet un tronçon de ligne et un véhicule propre à la mise en oeuvre du procédé.

On décrira maintenant, à titre d'exemple non limitatif, un mode de réalisation particulier de l'invention, en référence aux dessins schématiques annexés dans lesquels :

- la figure 1 illustre, à titre d'exemple de cause de défaut de contact entre une caténaire et un pantographe, une fatigue du pantographe ;
- la figure 2 illustre, à titre d'autre exemple de défaut entre une caténaire et un pantographe, un affaissement de la voie ;
- la figure 3 illustre, à titre d'exemple de défaut entre une caténaire et un pantographe, une caténaire détendue ;
- la figure 4 représente l'évolution en fonction du temps de la tension et du courant lors d'un arc électrique ;
- les figures 5 et 6 représentent respectivement la signature du courant sur une phase et de la tension entre deux phases lors de l'existence d'un arc électrique sur une ligne d'alimentation alimentée par un courant alternatif ;
- la figure 7 est un schéma d'ensemble d'un équipement de diagnostic selon l'invention ;
- la figure 8 est un organigramme de fonctionnement d'une unité de traitement informatique pour la mise en oeuvre du procédé selon l'invention ; et
- la figure 9 illustre la synchronisation entre la détection temps-fréquence de l'arc sur les signaux tension-courant et la détection sonore.

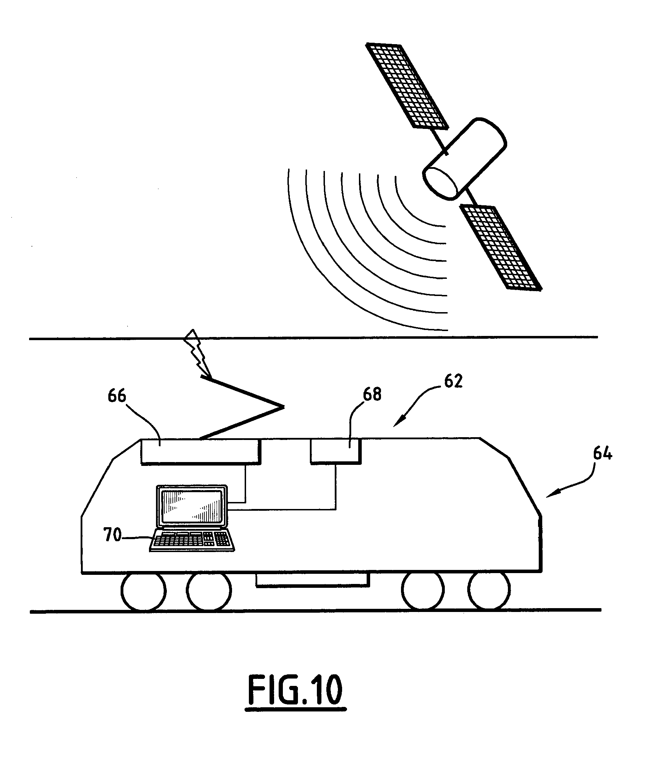

- la figure 10 est une vue schématique d'une motrice équipée pour le diagnostic par mise en oeuvre d'un procédé selon l'invention.

Le procédé qui va être décrit est appliqué aux défauts de contact entre un organe de contact, à savoir un pantographe et une caténaire formant une ligne d'alimentation électrique pour un train.

Plus généralement, le procédé est applicable également au contact entre la roue et le rail et au contact entre un patin suiveur et un rail d'alimentation spécifique formant la ligne d'alimentation. Ainsi, le procédé est applicable à tout contact entre un organe de contact et une ligne d'alimentation portant le contact.

Sur un système d'alimentation électrique d'un réseau ferroviaire, c'est-à-dire à des niveaux de moyenne tension, le début d'une défaillance, qu'elle soit sur la caténaire, le rail, les roues du train le pantographe le frotteur, a en fonctionnement une répercussion immédiate sur le contact. Un arc électrique se crée alors lors du passage du véhicule. Cet arc existe même avant que le défaut ou la défaillance ne soit manifeste et impose une intervention. Il est donc possible, à partir du suivi des arcs électriques, de conduire une maintenance préventive.

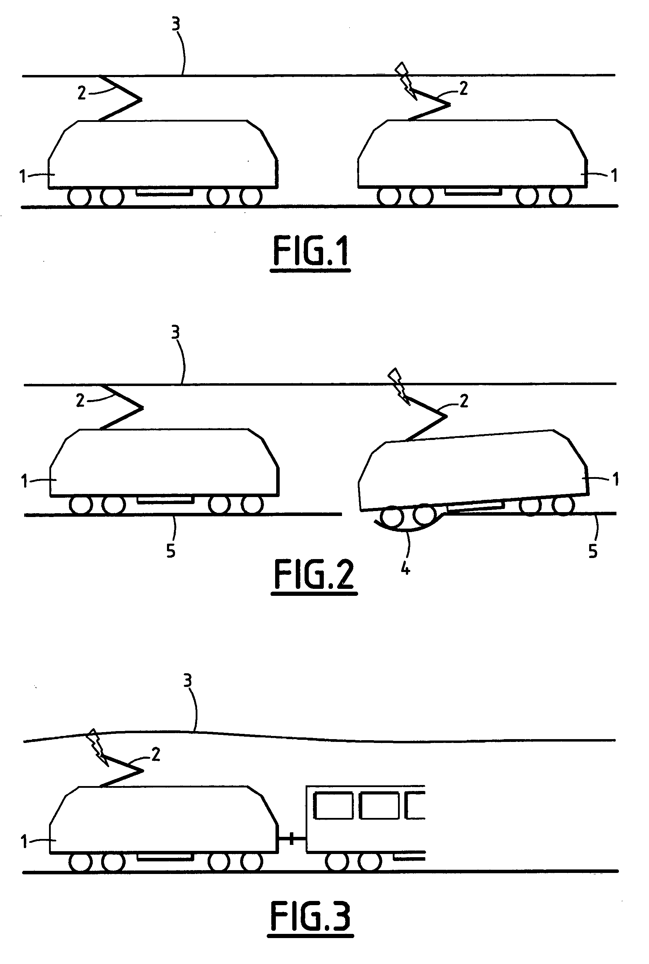

On illustrera ce point dans trois cas de défaillance en référence aux figures 1, 2 et 3.

On voit à la figure 1 un véhicule ferroviaire 1 muni d'un pantographe 2 qui lui permet de capter le courant électrique sur une caténaire 3.

La partie gauche de la figure représente le cas normal où les dispositifs d'extension du pantographe fonctionnent convenablement. Au contraire, dans la partie droite de la figure, ces systèmes sont défaillants du fait de la fatigue due par exemple aux vibrations, de sorte que des décollements générateurs d'arcs électriques se produisent. On comprend que de tels décollements et les arcs qui en résultent ont une occurrence d'autant plus fréquente que la défaillance du pantographe est sérieuse, et qu'ils se produisent sur la ligne à des emplacements aléatoires.

Le cas de la figure 2 est celui d'un affaissement 4 de la voie 5.

Comme précédemment, la partie gauche de la figure représente le cas normal. Dans la partie droite, l'affaissement 4 produit un décollement du pantographe si la vitesse du train est suffisante et donc un arc électrique. Dans ce cas, l'arc se produit une seule fois au passage de pratiquement tous les pantographes. Il est par ailleurs parfaitement localisé.

Le cas de la figure 3 est celui d'une caténaire détendue 3.

La partie droite de la figure représente l'avant du véhicule ferroviaire. La partie gauche l'arrière du véhicule. Dans le cas où la caténaire est détendue, la vitesse du train et la pression de contact du pantographe sur la caténaire font osciller cette dernière, avec pour conséquence l'existence d'un arc électrique entre le pantographe de la motrice de queue et la caténaire.

On peut donc établir une typologie des arcs électriques en fonction de leur localisation de leur fréquence d'occurrence et de leur origine. Le tableau ci-dessous en donne un exemple.

TABLEAU 1

| Origine : du type de défaillance | Occurrence de l'arc électrique | Situation spatiale | Responsabilité |
|---|---|---|---|
| Fatigue pantographe | Nombreuses fois | Non localisé | Matériel roulant |
| Affaissement de la voie | Rares fois | Endroit précis de l'affaissement | Infrastructure |
| Caténaire détendue ou cisaillée | Nombreuses fois en peu de temps (rebond du pantographe sur la caténaire) | Assez bien localisé entre deux points de suspension de la caténaire | Infrastructure |
| Roue usée | Nombreuses fois avec une répétition dans le temps (à la fréquence de rotation de la roue) | Non localisé | Matériel roulant |
| Electro-érosion du pantographe (déformation du point de contact pantographe-caténaire) | Nombreuses fois avec une fréquence identifiée | Non localisé | Matériel roulant |
| Déréglage de l'actionneur du pantographe | Nombreuse fois | Non localisé | Matériel roulant |

Le procédé selon l'invention prévoit que si on détecte les arcs électriques entre un organe de contact et une ligne d'alimentation ferroviaire où transite un véhicule alimenté par cette ligne, qu'on localise ces arcs et qu'on analyse leur fréquence d'occurrence, on peut en déduire, avec une forte probabilité, l'origine du défaut, c'est-à-dire le type de défaillance réelle ou à venir qui provoque ces arcs. Ce diagnostic est indépendant du niveau du courant et de la tension, ainsi que de la nature des signaux (alternatifs ou continus), au niveau de la ligne d'alimentation. Ces différentes étapes sont de préférence mises en oeuvre par ordinateur.

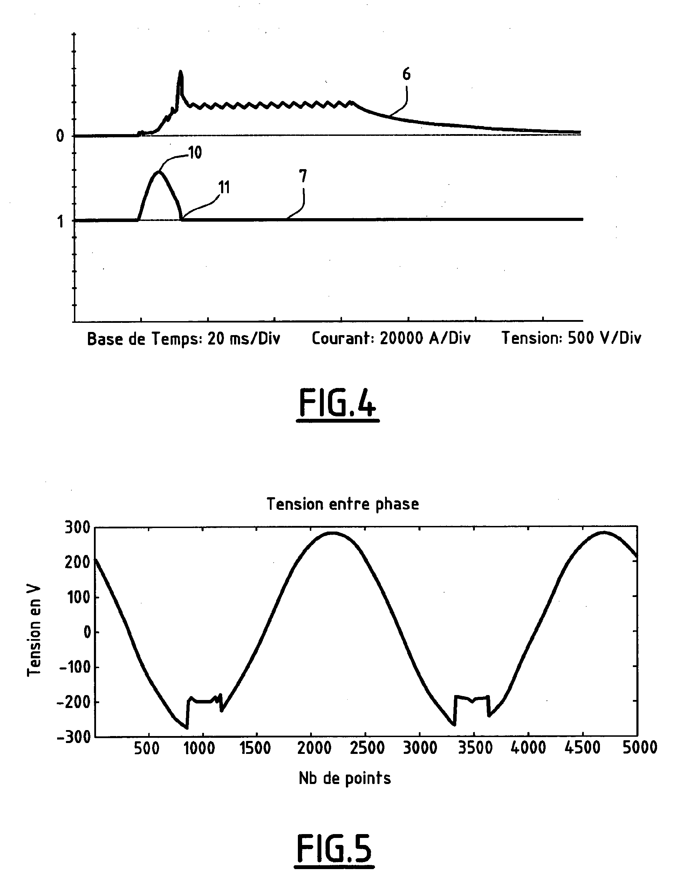

Pour la détection et l'analyse de l'arc, on sait qu'un arc électrique est, par nature, un phénomène non linéaire et apériodique comme on peut le voir sur les oscillogrammes de la figure 4, dont l'axe des abscisses représente le temps.

Sur l'oscillogramme du haut, on voit la tension 6 générée par un arc à l'ouverture d'un disjoncteur en fonction du temps, sur l'oscillogramme du bas, l'onde de courant 7. Au maximum du courant, en 10, il y a la création de l'arc que l'on détecte par une variation rapide de la tension (fort dv/dt), et à l'annulation du courant, en 11, il y a extinction de l'arc électrique.

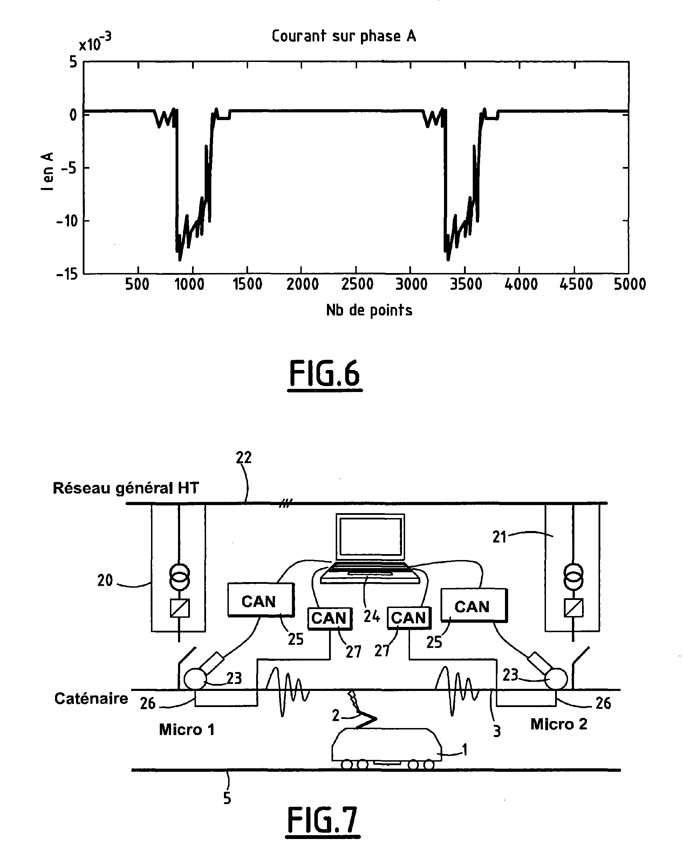

On retrouve sur la caténaire cette non linéarité due à l'arc, mais avec des signatures différentes illustrées aux figures 5 et 6.

On voit à la figure 7 un exemple (les références sont les mêmes que sur les figures 1 et 2) d'une installation permettant la mise en oeuvre du procédé selon l'invention.

Les détections électriques et acoustiques des arcs s'effectuent à partir de deux sous-stations 20 et 21 alimentant le tronçon de réseau correspondant à la caténaire 3 à partir d'un réseau général haute tension 22.

A cet effet, des systèmes d'acquisition sonore 23, tels que des capteurs acoustiques sont disposés à proximité de la caténaire 3 dans chacune des sous-stations et sont reliés à des moyens de traitement informatique 24 par l'intermédiaire de convertisseurs analogique/numérique 25.

De même, des capteurs électriques 26 sont reliés aux moyens 24 par des convertisseurs analogique/numérique 27.

Les moyens 24 effectuent la détection de la présence d'un arc et la localisation dudit arc, comme décrit dans la suite de la description.

Le fait de disposer de deux systèmes d'acquisition sonore 23 et deux capteurs électriques 26 sur un même tronçon de caténaire permet de localiser plus précisément de façon spatiale la présence de l'arc électrique, en procurant une redondance des signatures sonores et électriques de l'arc. Ceci permet de réduire l'imprécision de la localisation de l'arc due, par exemple, à des phénomènes de réflexion.

Afin de déterminer précisément l'instant et l'endroit où a eu lieu un arc électrique et sa répétitivité, l'analyse spatiale des signaux acoustiques doit être synchronisée sur l'analyse temps-fréquence des signaux tension-courant.

La vitesse de propagation de la signature électrique de l'arc jusqu'aux capteurs de la cellule de sous station étant nettement plus rapide (270000 km/s) que la vitesse de propagation du son (3350 m/s), on prend comme moment de référence, pour chaque sous-station, l'instant de détection de la signature électrique de l'arc. On détermine grâce au retard $\tau$ des signaux sonores par rapport à ce moment de référence l'endroit précis où s'est produit l'arc électrique en tenant compte de la vitesse de propagation du son. Le retard $\Delta\tau$ de l'acquisition de la signature sonore de l'arc entre les deux systèmes d'acquisition sonore permet d'augmenter la précision de la localisation spatiale de l'arc électrique.

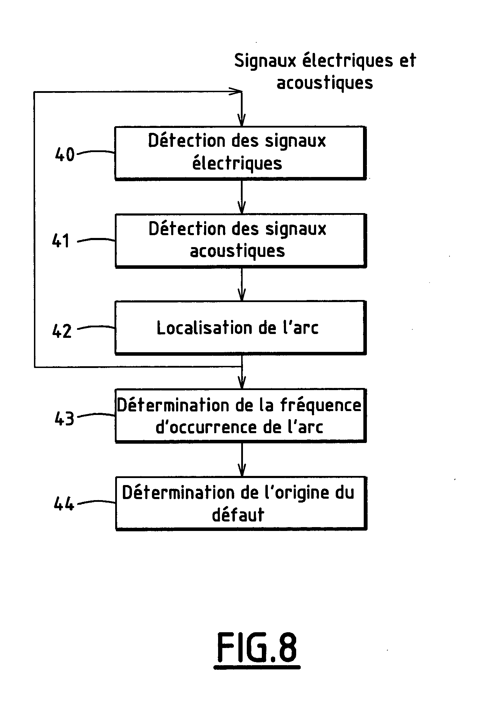

Le procédé détaillé est illustré à la figure 8. Il est mis en oeuvre par des moyens de traitement informatique prévus au niveau d'une station d'alimentation.

Les moyens de traitement informatique de chaque station détectent en 40 les signaux électriques produits par un arc électrique.

Pour ce faire, une analyse du signal électrique est effectuée.

Etant donné le caractère furtif et non linéaire d'un arc électrique, on utilise pour l'étape 40 de détection de l'instant d'arrivée du signal électrique de préférence des méthodes d'analyse fréquentielle pour reconnaître sa signature.

L'analyse de Fourier n'est a priori pas la méthode la mieux adaptée, dans la mesure où son utilisation exige en principe de connaître la totalité de l'historique du signal à analyser et qu'il en résulte pratiquement une impossibilité de discerner l'intervalle de temps dans lequel a lieu un phénomène particulier.

L'analyse de Fourier à court terme autorise la perception de phénomènes instationnaires. En revanche, la fenêtre d'analyse du signal est fixe en fréquence et un compromis est donc à faire entre la détection de phénomènes basses et hautes fréquences. En outre, la transformation inverse du signal est très complexe, avec perte de la phase du signal entre deux fenêtres d'analyse.

L'analyse par ondelettes continues s'effectue sur une bande spectrale fréquentielle très étendue, selon le choix de l'ondelette de comparaison qui dépend donc des signaux que l'on veut détecter. Du point de vue de sa mise en oeuvre, cette méthode est relativement exigeante en espace informatique de sauvegarde.

L'analyse par ondelettes discrètes est plus rapide que par ondelettes continues, mais la reconstitution du signal est moins précise.

L'homme de métier saura en tout état de cause choisir la méthode d'analyse la plus appropriée. Si une analyse par ondelettes discrètes est utilisée, le choix d'une ondelette pour une application particulière tiendra compte des propriétés de ces dernières :

- L'orthogonalité : les propriétés géométriques des ondelettes orthogonales sont importantes, car elles facilitent la transformation du signal. Le calcul de chaque coefficient d'ondelette ne nécessite qu'un produit scalaire et reste indépendant du calcul des autres coefficients de la transformée.

La transformation orthogonale permet une résolution d'équation facile et rapide mais avec le risque de perdre de l'information sachant que celle-ci n'est encodée que sur un seul coefficient et nulle part ailleurs.

- La rapidité d'analyse : il est préférable que les ondelettes soient construites non pas par formule analytique mais par itérations successives, ce qui permet d'appliquer seulement une opération sur le dernier résultat obtenu et pas sur la totalité du signal.
- Le support de l'ondelette : l'ondelette doit décroître rapidement vers 0 lorsque le temps tend vers l'infini.
- Le nombre de moments nuls : plus l'ondelette oscille, plus elle possède de moments nuls. Les moments nuls sont définis par $\int_{R} t^{j} \psi(t) dt = 0$ avec j=0,..., k quand l'ondelette possède k+1 moments nuls.

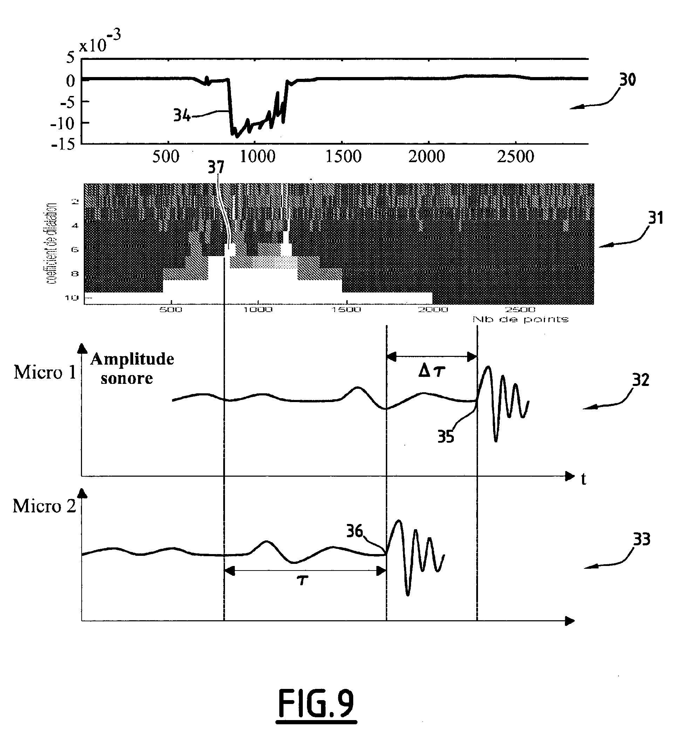

Comme connu en soi, la transformée par ondelettes discrètes, qui est la méthode d'analyse préférée, du signal électrique illustré sur le graphique 30 de la figure 9 produit un scalogramme tel qu'illustré et désigné par la référence 31.

Cette figure correspond à l'existence d'une décharge électrique appelée « impulsion de Trichel » sur des signaux de courant et de tension alternatifs de 200V. Sur cette figure, en 30, est représenté le courant électrique mesuré au niveau de l'un des capteurs.

En ordonnée de ce scalogramme 31 se trouve l'image de la fenêtre d'analyse du signal qui va de 10 à 1. Plus le niveau est élevé, plus l'ondelette est comprimée analysant alors des « pseudo-fréquences » élevées. Dans cet exemple, la fréquence d'échantillonnage est de 1 Mhz, de sorte qu'il existe une équivalence entre le coefficient de dilatation et la fréquence.

Sur cet exemple, les coefficients d'ondelette qui sont assez élevés sont identifiés par des couleurs claires. Ces coefficients se retrouvent sur la tension et le courant sur les niveaux 6 et 4 représentés par des atomes blancs. Ces atomes apparaissent exactement au début et à la fin du phénomène de décharge. On peut relever par la suite ces niveaux et définir des seuils, si ces seuils sont dépassés, on pourra alors considérer que nous sommes en présence de décharge électrique sur un faisceau de câblage et donc prévoir un programme de maintenance approprié avant défaillance complète.

L'arc électrique et l'instant de survenance de l'arc sont identifiés par le premier atome 37 blanc de coefficient de dilatation d'ordre 6 dans le scalogramme 31 de la figure 9.

En ce qui concerne maintenant la localisation de l'arc, il est difficile de localiser par anticipation une défaillance par des méthodes type "échométrie" en envoyant une onde électrique sur un tronçon de réseau. Une telle opération pourrait en effet endommager les circuits électroniques d'un train circulant alimenté par ce réseau et les systèmes sécuritaires de voies. En outre, ce signal électrique serait noyé dans le signal de courant électrique que consomment les trains qui circulent sur le même tronçon.

Il est donc préférable de détecter les signaux acoustiques émis par les arcs électriques. Ces signaux peuvent en effet avoir une très forte amplitude et bénéficient en outre de la très bonne propagation d'une onde sonore dans le cuivre de la ligne d'alimentation.

La détection des signaux acoustiques conduite à l'étape 41 s'effectue de préférence par analyse fréquentielle en utilisant les critères de choix exposés ci-dessus pour la détection des signaux électriques.

L'amplitude des signaux sonores relevée par les moyens d'acquisition sonore 23 est représentée sur la figure 9, en 32 et 33. On voit en 34 le début de la signature électrique d'un arc électrique, et en 35 et 36 le début de sa signature acoustique telle que relevée par les deux systèmes d'acquisition sonore au niveau des deux sous-stations.

La localisation de l'arc détecté est ensuite réalisée à l'étape 42 en déterminant l'écart de temps entre la détection des signaux électriques et la détection des signaux acoustiques effectuées aux étapes 40 et 41, compte tenu que la vitesse du son dans le cuivre est de 3350 m/s à une température ambiante de 25°C.

Ainsi depuis chaque station 20, 21 et pour chaque arc électrique, la position est déterminée et mémorisée à l'étape 42 en considérant que l'arc a pris naissance à une distance de la station égale à :

$$d = \frac{Vs\,Ve}{Ve - Vs}\,(t_s\text{-}t_e)$$

où $V_s$ est la vitesse du son dans le matériau constituant la caténaire
$V_e$ est la vitesse de propagation du signal électrique
$t_s$ est l'instant de détection de l'onde acoustique
$t_e$ est l'instant de détection du signal électrique $V_s$
en première approximation comme $V_e \gg V_s$
d est estimé à $d = V_s(t_s\text{-}t_e)$.

Deux valeurs $d_1$ et $d_2$ de distances depuis chacune des stations 20, 21 sont ainsi déterminées. La valeur retenue pour la mémorisation de la position de l'arc est par exemple la position médiane entre les deux points distants de $d_1$ et $d_2$ des deux stations.

Les étapes 40 à 42 sont reproduites pour un grand nombre d'arcs électriques détectés sur la ligne lors de la circulation d'un ou plusieurs trains.

Chacune des positions des arcs détectés et leur instant de survenance sont mémorisés.

Les occurrences des arcs détectés sont calculées à l'étape 43.

L'origine du ou des défauts actuels ou à venir est effectuée à l'étape 44 à partir de la grille de décision exposée dans le tableau 1 sur la base de la position des arcs détectés et de la fréquence d'occurrence des arcs, en des points déterminés ou aléatoirement le long de la ligne.

En particulier, la déduction de l'origine comprend la détermination de la responsabilité de l'infrastructure et du matériel roulant dans la cause du défaut.

Le procédé décrit ici permet à partir du résultat obtenu d'assurer une maintenance préventive en connaissant les éléments sur lesquels la maintenance doit porter. Aucun matériel spécifique ne devant être implanté sur les véhicules, le procédé est particulièrement commode à mettre en oeuvre.

**Revendications**

1. Procédé de détection préventive et de diagnostic de l'origine de défauts de contact entre une ligne d'alimentation électrique (3) d'une infrastructure et un organe fixe conducteur (2) d'un matériel roulant, mobile le long de la ligne (3), des arcs électriques se produisant en cas de défaut de contact entre la ligne d'alimentation électrique (3) et l'organe conducteur mobile (2), le procédé comprenant les étapes consistant à :

   détecter lesdits arcs électriques (40, 41),
   localiser (42) les arcs électriques détectés, et,
   déterminer (43) la fréquence d'occurrence des arcs électriques détectés,
   **caractérisé en ce qu'**il comporte une étape consistant à déduire (44) l'origine des défauts de contact à partir de la localisation et des fréquences d'occurrence desdits arcs électriques, en déterminant la responsabilité de l'infrastructure fixe et du matériel roulant dans la cause du défaut, le procédé étant mis en oeuvre par des moyens de traitement informatiques.

2. Procédé selon la revendication 1, dans lequel l'étape de détection desdits arcs électriques comprend la détection (41) des signaux acoustiques émis par lesdits arcs électriques.

3. Procédé selon l'une quelconque des revendications 1 et 2, dans lequel l'étape de détection desdits arcs électriques comprend la détection (40) des signaux électriques émis par lesdits arcs électriques.

4. Procédé selon l'une quelconque des revendications 2 et 3, dans lequel la détection desdits signaux est effectuée par analyse fréquentielle.

5. Procédé selon la revendication 4, dans lequel l'analyse fréquentielle est une analyse par ondelettes.

6. Procédé selon la revendication 5, dans lequel l'analyse par ondelettes est une analyse par ondelettes discrètes.

7. Procédé selon l'une quelconque des revendications précédentes, dans lequel la localisation des arcs électriques détectés est effectuée à partir de l'écart de temps ($\tau$) entre l'instant de détection desdits signaux électriques et l'instant de détection desdits signaux acoustiques.

8. Procédé selon l'une quelconque des revendications 1 à 7, appliqué au diagnostic de l'état de contact entre une caténaire (3) de réseau ferroviaire, respectivement un rail (5) de voie ferrée, et la bande de contact d'un pantographe (2) de véhicule ferroviaire (1), respectivement une roue de véhicule ferroviaire.

9. Procédé selon la revendication 8, dans lequel au moins l'étape de détection des arcs électriques est effectuée à l'emplacement d'une sous-station d'alimentation (20, 21).

10. Procédé selon l'ensemble des revendications 7 et 9, dans lequel l'étape de localisation des arcs électriques sur un tronçon de caténaire est effectuée à partir des deux sous-stations alimentant ledit tronçon.

11. Produit programme d'ordinateur, **caractérisé par le fait qu'**il comprend un jeu d'instructions aptes à la mise en oeuvre du procédé selon l'une quelconque des revendications précédentes, lorsqu'il est exécuté par une unité de traitement informatique.

12. Equipement de détection préventive et de diagnostic de l'origine, pour la mise en oeuvre d'un procédé selon l'une quelconque des revendications 1 à 10, comprenant :

   des moyens (23, 24, 25, 26, 27 ; 66) de détection desdits arcs électriques,
   des moyens de localisation (23, 24, 25, 26, 27 ; 68) des arcs électriques détectés,,
   des moyens de détermination (23, 24, 25, 26, 27 ; 70) de la fréquence d'occurrence des arcs électriques détectés,
   **caractérisé en ce qu'**il comprend :

   des moyens de traitement informatique pour déduire (23, 24, 25, 26, 27 ; 70) l'origine des défauts de contact à partir de la localisation et des fréquences d'occurrence desdits arcs électriques, en déterminant la responsabilité de l'infrastructure et du matériel roulant dans la cause du défaut.

**13.** Tronçon de ligne équipé d'une ligne d'alimentation électrique (3) et d'au moins une sous-station d'alimentation de la ligne d'alimentation électrique (3), **caractérisé en ce que** la sous-station comporte un équipement selon la revendication 12.

**14.** Véhicule ferroviaire comportant au moins les moyens (66) de détection des arcs électriques et des moyens (68) de localisation des arcs électriques par géopositionnement par satellite du véhicule de l'équipement selon la revendication 12.

**15.** Véhicule ferroviaire selon la revendication 14, **caractérisé en ce qu'**il comporte un équipement selon la revendication 12.

**Patentansprüche**

**1.** Verfahren zur präventiven Erfassung und Diagnose des Ursprungs von Kontaktfehlern zwischen einer Stromversorgungsleitung (3) einer Infrastruktur und einem ortsfesten Leiterelement (2) eines rollenden Materials, das entlang der Leitung (3) beweglich ist, wobei im Fall eines Kontaktfehlers zwischen der Stromversorgungsleitung (3) und dem beweglichen Leiterelement (2) Lichtbögen auftreten, wobei das Verfahren die Schritte enthält, die darin bestehen:

die Lichtbögen (40, 41) zu erfassen,
die erfassten Lichtbögen zu lokalisieren (42), und
die Auftrittshäufigkeit der erfassten Lichtbögen zu bestimmen (43),
**dadurch gekennzeichnet, dass** es einen Schritt aufweist, der darin besteht, den Ursprung der Kontaktfehler ausgehend von der Lokalisierung und den Auftrittshäufigkeiten der Lichtbögen abzuleiten (44), indem die Verantwortlichkeit der ortsfesten Infrastruktur und des rollenden Materials bei der Ursache des Fehlers bestimmt wird, wobei das Verfahren von EDV-Verarbeitungseinrichtungen durchgeführt wird.

**2.** Verfahren nach Anspruch 1, wobei der Schritt der Erfassung der Lichtbögen die Erfassung (41) der von den Lichtbögen emittierten akustischen Signale enthält.

**3.** Verfahren nach einem der Ansprüche 1 und 2, wobei der Schritt der Erfassung der Lichtbögen die Erfassung (40) der von den Lichtbögen emittierten elektrischen Signale enthält.

**4.** Verfahren nach einem der Ansprüche 2 und 3, wobei die Erfassung der Signale durch Frequenzanalyse erfolgt.

**5.** Verfahren nach Anspruch 4, wobei die Frequenzanalyse eine Wavelet-Analyse ist.

**6.** Verfahren nach Anspruch 5, wobei die Wavelet-Analyse eine diskrete Wavelet-Analyse ist.

**7.** Verfahren nach einem der vorhergehenden Ansprüche, wobei die Lokalisierung der erfassten Lichtbögen ausgehend von der Zeitabweichung ($\tau$) zwischen dem Erfassungsaugenblick der elektrischen Signale und dem Erfassungsaugenblick der akustischen Signale ausgeführt wird.

**8.** Verfahren nach einem der Ansprüche 1 bis 7, angewandt an die Diagnose des Kontaktzustands zwischen einer Oberleitung (3) eines Schienennetzes bzw. einer Schiene (5) eines Schienenwegs und dem Kontaktstreifen eines Stromabnehmers (2) eines Schienenfahrzeugs (1) bzw. einem Rad eines Schienenfahrzeugs.

**9.** Verfahren nach Anspruch 8, wobei mindestens der Schritt der Erfassung der Lichtbögen am Standort eines Versorgungs-Unterwerks (20, 21) ausgeführt wird.

**10.** Verfahren nach der Gesamtheit der Ansprüche 7 und 9, wobei der Schritt der Lokalisierung der Lichtbögen auf einem Oberleitungsabschnitt ausgehend von den zwei Unterwerken ausgeführt wird, die den Abschnitt versorgen.

**11.** Computerprogrammprodukt, **dadurch gekennzeichnet, dass** es einen Satz von Anweisungen enthält, die zur Durchführung des Verfahrens nach einem der vorhergehenden Ansprüche geeignet sind, wenn es von einer EDV-Verarbeitungseinheit ausgeführt wird.

12. Ausrüstung zur präventiven Erfassung und Ursprungsdiagnose für die Durchführung eines Verfahrens nach einem der Ansprüche 1 bis 10, die enthält:

Einrichtungen (23, 24, 25, 26, 27; 66) zur Erfassung der Lichtbögen,
Einrichtungen (23, 24, 25, 26, 27; 68) zur Lokalisierung der erfassten Lichtbögen,
Einrichtungen (23, 24, 25, 26, 27; 70) zur Bestimmung der Auftrittshäufigkeit der erfassten Lichtbögen,
**dadurch gekennzeichnet, dass** sie enthält:

EDV-Verarbeitungseinrichtungen, um den Ursprung der Kontaktfehler ausgehend von der Lokalisierung und den Auftrittshäufigkeiten der Lichtbögen abzuleiten (23, 24, 25, 26, 27; 70), indem die Verantwortlichkeit der Infrastruktur und des rollenden Materials bei der Ursache des Fehlers bestimmt wird.

13. Leitungsabschnitt, der mit einer Stromversorgungsleitung (3) und mit mindestens einem Versorgungs-Unterwerk der Stromversorgungsleitung (3) ausgestattet ist, **dadurch gekennzeichnet, dass** das Unterwerk eine Ausrüstung nach Anspruch 12 aufweist.

14. Schienenfahrzeug, das mindestens die Einrichtungen (66) zur Erfassung der Lichtbögen und Einrichtungen (68) zur Lokalisierung der Lichtbögen durch Geopositionierung per Satellit des Fahrzeugs der Ausrüstung nach Anspruch 12 aufweist.

15. Schienenfahrzeug nach Anspruch 14, **dadurch gekennzeichnet, dass** es eine Ausrüstung nach Anspruch 12 aufweist.


**Claims**

1. Method for the preventive detection of and origin diagnosis for contact faults between an electricity supply line (3) of an infrastructure and a fixed conducting member (2) of an item of rolling stock which moves along the line (3), electric arcs occurring in the event of a contact fault between the electricity supply line (3) and the movable conducting member (2), the method comprising the steps consisting in:

detecting said electric arcs (40,41),
locating (42) the detected electric arcs, and
determining (43) the frequency of occurrence of the detected electric arcs,
**characterized in that** it includes a step consisting in deducing (44) the origin of the contact faults on the basis of the location and the frequencies of occurrence of said electric arcs, while determining the responsibility of the fixed infrastructure and of the item of rolling stock for the cause of the fault, the method being implemented by computer processing means.

2. Method according to Claim 1, in which the step of detecting said electric arcs comprises the detection (41) of the acoustic signals transmitted by said electric arcs.

3. Method according to either one of Claims 1 and 2, in which the step of detecting said electric arcs comprises the detection (40) of the electrical signals transmitted by said electric arcs.

4. Method according to either one of Claims 2 and 3, in which the detection of said signals is carried out by frequency analysis.

5. Method according to Claim 4, in which the frequency analysis is wavelet analysis.

6. Method according to Claim 5, in which the wavelet analysis is discrete wavelet analysis.

7. Method according to any one of the preceding claims, in which the locating of the detected electric arcs is carried out on the basis of the separation in time ($\tau$) between the instant of detection of said electrical signals and the instant of detection of said acoustic signals.

8. Method according to any one of Claims 1 to 7, applied to the diagnosis of the state of contact between a catenary (3) of the railway network or a rail (5) of a railway track and the contact strip of a pantograph (2) of a railway vehicle (1) or a wheel of a railway vehicle respectively.

9. Method according to Claim 8, in which at least the step of detecting the electric arcs is carried out at the site of a supply substation (20,21).

10. Method according to Claims 7 and 9 together, in which the step of locating the electric arcs on a section of catenary is carried out from the two substations supplying power to said section.

11. Computer program product, **characterized by** the fact that it comprises a set of instructions capable of implementing the method according to any one of the preceding claims when it is executed by a computer processing unit.

12. Item of equipment for preventive detection and origin diagnosis, for the implementation of a method according to any one of Claims 1 to 10, comprising:

   means (23,24,25,26,27;66) for detecting said electric arcs,
   means (23,24,25,26,27;68) for locating the detected electric arcs,
   means (23,24,25,26,27;70) for determining the frequency of occurrence of the detected electric arcs,
   **characterized in that** it comprises:

      computer processing means for deducing (23,24,25,26,27;70) the origin of the contact faults on the basis of the location and the frequencies of occurrence of said electric arcs, while determining the responsibility of the infrastructure and of the item of rolling stock for the cause of the fault.

13. Line section equipped with an electricity supply line (3) and at least one supply substation of the electricity supply line (3), **characterized in that** the substation includes an item of equipment according to Claim 12.

14. Railway vehicle including at least the means (66) for detecting electric arcs and the means (68) for locating the electric arcs by satellite geopositioning of the vehicle of the item of equipment according to Claim 12.

15. Railway vehicle according to Claim 14, **characterized in that** it includes an item of equipment according to Claim 12.

## FIG.1

## FIG.2

## FIG.3

Base de Temps: 20 ms/Div    Courant: 20000 A/Div    Tension: 500 V/Div

## FIG.4

Tension entre phase

## FIG.5

**FIG.6**

**FIG.7**

Signaux électriques et
acoustiques

40 ─── Détection des signaux
électriques

41 ─── Détection des signaux
acoustiques

42 ─── Localisation de l'arc

43 ─── Détermination de la fréquence
d'occurrence de l'arc

44 ─── Détermination de l'origine du
défaut

## FIG.8

## FIG.9

**FIG.10**

**EP 2 389 302 B1**

**RÉFÉRENCES CITÉES DANS LA DESCRIPTION**

**Documents brevets cités dans la description**

- JP 02290746 A